# EUROPEAN PATENT APPLICATION

(11) **EP 4 800 590 A1**
(43) Date of publication of application: **02.09.2026**
(21) Application number: 26157635.9
(22) Date of filing: 10.02.2026
(51) Int. Cl.: G06F 21/60, H04L 9/08

(54) **INFORMATION PROCESSING SYSTEM, INFORMATION PROCESSING METHOD, AND COMPUTER-READABLE NON-TRANSITORY STORAGE MEDIUM**

(30) Priority: 28.02.2025 JP 2025031210
(71) Applicant: Hitachi, Ltd., Tokyo 100-8280 (JP)
(72) Inventor: SATO, Hisayoshi, Tokyo, 100-8280 (JP); YAMAMOTO, Kyohei, Tokyo, 100-8280 (JP)
(74) Representative: Mewburn Ellis LLP

(57) **Abstract**

A first secure server: encrypts a data encryption key with a unique key unique to the first secure server; stores the encrypted unique key therein; generates a first ciphertext obtained by encrypting the data encryption key with a first shared key; transmits the first ciphertext to the second secure server; generate a second ciphertext obtained by encrypting an escrow target data with the data encryption key; stores the second ciphertext in the first secure server therein; and outputs duplicated data of the second ciphertext, and a second secure server: decrypts the first ciphertext received from the first secure server with the first shared key to extract the data encryption key; generates a third ciphertext obtained by encrypting the extracted data encryption key with a private key; stores the third ciphertext therein; and delete the private key therefrom.

## Description

### CLAIM OF PRIORITY

The present application claims priority from Japanese patent application JP 2025-031210 filed on February 28, 2025, the content of which is hereby incorporated by reference into this application.

### BACKGROUND OF THE INVENTION

The present invention relates to an information processing system, an information processing method, and a computer-readable non-transitory storage medium.

Recently, a trusted execution environment (TEE), which is an example of a secure execution environment using a hardware mechanism, has attracted attention as a data protection mechanism.

The TEE is implemented in hardware so that a person who does not have a valid authority cannot peep into data handled inside the execution environment. A data holder encrypts data and transmits the data to an external TEE, the data is used in a form in which the data is decrypted inside the TEE, a desired processing is executed, and a result thereof or the like is transmitted to a data user (or data holder).

In the TEE, when data is held in a storage device such as a memory, not a few ensure high safety by encrypting and storing the data using a private key (also referred to as a unique key) unique to the TEE.

As a background art of the present technical field, JP 2024-121874 A is known. This publication describes that "A storage system includes: a first storage connected to a server running an application; a data protection storage that obtains a backup of the first storage; and a monitoring server that monitors the data protection storage. The monitoring server includes: a backup executing unit that obtains, from the first storage, the backup of data to the data protection storage; a write data quantity monitoring unit that determines abnormality when a write data quantity to the data protection storage when the backup executing unit obtains the backup exceeds a predetermined quantity; and an alert outputting unit that outputs an alert when the write data quantity monitoring unit determines the abnormality." (see Abstract).

### SUMMARY OF THE INVENTION

However, in a case where the secure server stores encrypted data encrypted using the above-described unique key, there is a possibility that a failure occurs in the secure server due to, for example, a failure of a component of the secure server, occurrence of a fire, occurrence of a natural disaster, or the like, and the unique key becomes unavailable. In a case where the unique key cannot be used, even if the stored encrypted data can be retrieved, the encrypted data cannot be decrypted, and the data is substantially lost.

The technique described in JP 2024-121874 A backs up data, but a method for coping with a case in which a failure occurs in a secure server that stores high-confidentiality encrypted data encrypted using the above-described unique key is not described in JP 2024-121874 A.

Therefore, one aspect of the present invention reduces the risk of data loss at the time of occurrence of failure while enhancing the confidentiality of data.

The one aspect of the present invention adopts to the following structures in order to solve the above problems. An information processing system comprises: a first secure server; and a second secure server, the first secure server is configured to hold escrow target data, a data encryption key, a first shared key, and a unique key unique to the first secure server, the second secure server is configured to hold a private key and the first shared key, the first secure server is configured to: encrypt the data encryption key with the unique key; store the data encryption key in the first secure server; generate a first ciphertext obtained by encrypting the data encryption key with the first shared key; transmit the first ciphertext to the second secure server; generate a second ciphertext obtained by encrypting the escrow target data with the data encryption key; store the second ciphertext in the first secure server; and output duplicated data of the second ciphertext, and the second secure server is configured to: decrypt the first ciphertext received from the first secure server with the first shared key to extract the data encryption key; generate a third ciphertext obtained by encrypting the extracted data encryption key with the private key; store the third ciphertext in the second secure server; and delete the private key from the second secure server.

The one aspect of the present invention can reduce the risk of data loss at the time of occurrence of failure while enhancing the confidentiality of data.

Problems, configurations, and effects which are not mentioned above are explained in the following embodiments.

### BRIEF DESCRIPTIONS OF DRAWINGS

The present invention can be appreciated by the description which follows in conjunction with the following figures, wherein:
Fig. 1 is a block diagram illustrating a configuration example of a secure data backup system according to the first embodiment;
Fig. 2 is a block diagram illustrating a configuration example of a data holder terminal according to the first embodiment;
Fig. 3 is a block diagram illustrating a configuration example of a secure server according to the first embodiment;
Fig. 4 is a block diagram illustrating a configuration example of a data storage server according to the first embodiment;
Fig. 5 is a sequence diagram illustrating an example of data escrow processing with a first secure server according to the first embodiment;
Fig. 6 is a sequence diagram illustrating an example of private key escrow processing with a second secure server according to the first embodiment;
Fig. 7 a sequence diagram illustrating an example of data encryption storage processing is according to the first embodiment; and
Fig. 8 is a sequence diagram illustrating an example of data restoration processing in a case where the first secure server cannot be used according to the first embodiment.

### DESCRIPTION OF THE PREFERRED EMBODIMENTS

In the following, embodiments of the present invention are explained referring the attached drawings. In the embodiments, the same configuration has the same reference letter. The embodiments are examples to achieve the present invention and do not limit a technical range of the present invention.

### First embodiment

### <System configuration>

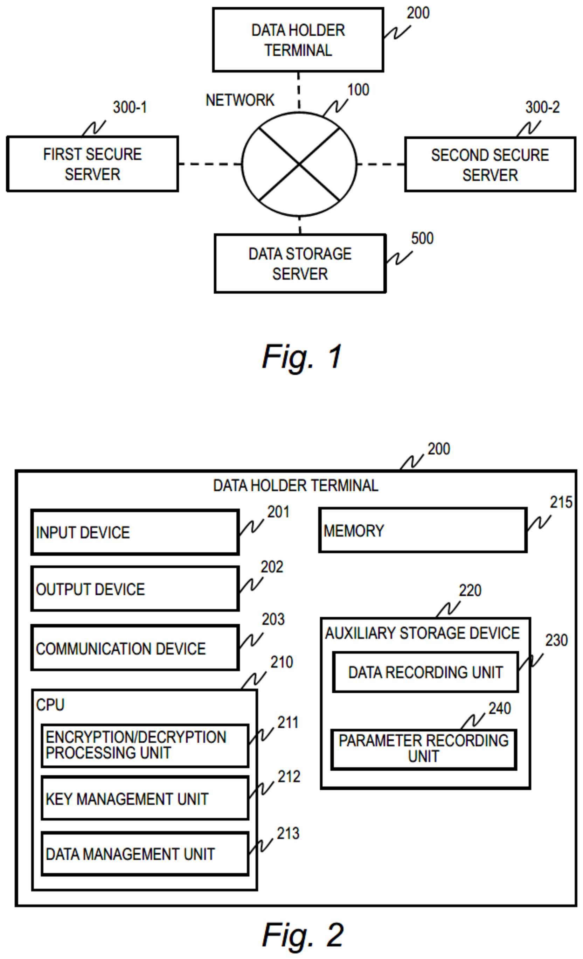

Fig. 1 is a block diagram illustrating a configuration example of a secure data backup system according to a first embodiment. The secure data backup system includes, for example, a data holder terminal 200, a first secure server 300-1, a second secure server 300-2, and a data storage server 500 connected through a network 100 such as the Internet. Hereinafter, the first secure server 300-1 and the second secure server 300-2 may be collectively referred to simply as a secure server 300.

The data holder terminal 200 holds data to be escrowed and escrows the data to be escrowed with the first secure server 300-1, and the first secure server 300-1 encrypts and stores the data to be escrowed. Hereinafter, the data to be escrowed is also referred to as data S.

The data storage server 500 stores duplicated data of data in which the data S is encrypted. The first secure server 300-1 stores the encryption/decryption key used to encrypt the data S, and escrows the encryption/decryption key also in the second secure server 300-2, and the second secure server 300-2 encrypts and stores the encryption/decryption key.

While the first secure server 300-1 is operating normally, the data holder terminal 200 performs, with respect to the first secure server 300-1, additional data escrow and the like, retrieves the escrowed data from the first secure server 300-1, and requests the first secure server 300-1 to perform a specific process on the escrowed data.

When a failure occurs in the first secure server 300-1, the data holder terminal 200 requests the second secure server 300-2 to restore the escrowed data, and the data is restored by the second secure server 300-2 and the data storage server 500.

### <Configuration example of data holder terminal 200>

Fig. 2 is a block diagram illustrating a configuration example of the data holder terminal 200. The data holder terminal 200 includes, for example, a computer including an input device 201, an output device 202, a communication device 203, a central processing unit (CPU) 210, a memory 215, and an auxiliary storage device 220 connected to each other by an internal communication line such as a bus.

The CPU 210 is an example of a processor, and executes a program stored in the memory 215. As an example of the processor, the CPU 210 or a graphics processing unit (GPU) can be considered, but another semiconductor device may be used as long as the device is an entity that executes predetermined processing.

The memory 215 includes a read only memory (ROM) that is a nonvolatile storage element and a random access memory (RAM) that is a volatile storage element. The ROM stores an invariable program (for example, basic input/output system (BIOS)) and the like. The RAM is a high-speed and volatile storage element such as a dynamic random access memory (DRAM), and temporarily stores a program executed by the CPU 210 and data used when the program is executed.

The auxiliary storage device 220 is, for example, a large-capacity and nonvolatile storage device such as a magnetic storage device (hard disk drive (HDD)) or a flash memory (solid state drive (SSD)), and stores a program executed by the CPU 210 and data used at the time of executing the program. That is, the program is read from the auxiliary storage device 220, loaded into the memory 215, and executed by the CPU 210.

The input device 201 is a device that receives an input from an operator, such as a keyboard, a mouse, or a touch screen. The output device 202 is a device that outputs the execution result of the program in a format that can be recognized by the operator, such as a display, a printer, or a speaker.

The communication device 203 is a network interface device that controls communication with other devices via the network 100 according to a predetermined protocol. Furthermore, the communication device 203 may include, for example, a serial interface such as a universal serial bus (USB) .

A part or all of the programs executed by the CPU 210 may be provided from a removable medium (CD-ROM, flash memory, or the like) that is a non-transitory storage medium or an external computer including a non-transitory storage device to the data holder terminal 200 via the network 100, and may be stored in the non-volatile auxiliary storage device 220 that is a non-transitory storage medium. Therefore, the data holder terminal 200 preferably has an interface for reading data from a removable medium. The same applies to the secure server 300 and the data storage server 500.

Note that each device included in the secure data backup system is provided with, for example, a program set including one or more programs executed by the CPU included in the device. The program set may include a common program executed in some or all of the devices included in the data backup system (for example, the first secure server 300-1 and the second secure server 300-2), or may include a program for each device (for example, a first program for the first secure server 300-1, a second program for the second secure server 300-2, and the like).

The data holder terminal 200 is a computer system configured a single physical computer or on a plurality of computers configured logically or physically, and may operate on separate threads on the same computer or may operate on a virtual computer constructed on a plurality of physical computer resources. The same applies to the secure server 300 and the data storage server 500.

The CPU 210 includes, for example, an encryption/decryption processing unit 211, a key management unit 212, and a data management unit 213 which are all functional units. The encryption/decryption processing unit 211 executes processing for performing encrypted communication for securely exchanging data with the secure server 300. The key management unit 212 manages a key used for encryption and/or decryption by the encryption/decryption processing unit 211. The data management unit 213 manages data held by the data holder terminal 200.

For example, the CPU 210 functions as the encryption/decryption processing unit 211 by operating in accordance with the encryption/decryption processing program loaded in the memory 215, and functions as the key management unit 212 by operating in accordance with the key management program loaded in the memory 215. The other functional units included in the CPU 210 have the same relationship with the program. Furthermore, the functional units described later included in the secure server 300 and the data storage server 500 have the same relationship with the program.

Note that some or all of the functions of the functional units included in the data holder terminal 200, the secure server 300, and the data storage server 500 may be realized by dedicated hardware such as an application specific integrated circuit (ASIC) or a field-programmable gate array (FPGA), for example.

The auxiliary storage device 220 includes, for example, a data recording unit 230 and a parameter recording unit 240. In the data recording unit 230, for example, various data including the data S to be escrowed are recorded. Various parameters including a key used by the encryption/decryption processing unit 211 are recorded in the parameter recording unit 240. Specifically, for example, a private key H used for secure storage of a key used for data encryption is recorded in the parameter recording unit 240.

In the present embodiment, the information used by the secure data backup system may be expressed by any data structure without depending on the data structure. For example, a data structure appropriately selected from a table, list, database, or queue may store the information.

In the present embodiment, some or all of the information stored in the auxiliary storage device of each device included in the secure data backup system may be stored in the memory of the device, or may be stored in an external database or the like connected to the device.

### <Configuration example of secure server 300>

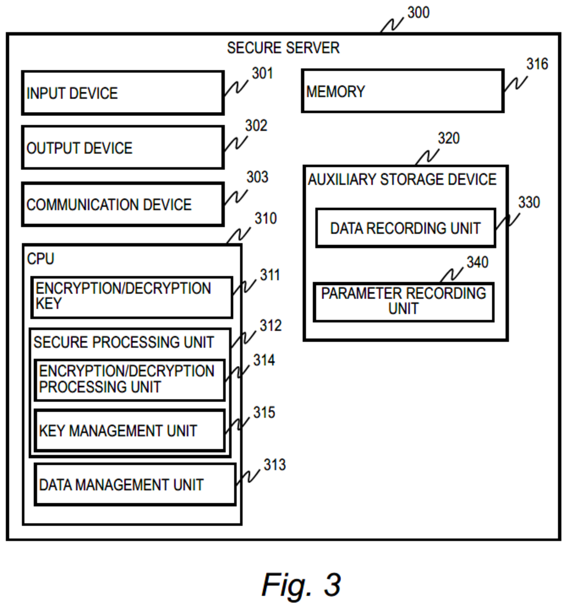

Fig. 3 is a block diagram illustrating a configuration example of the secure server 300. The secure server 300 includes, for example, a computer including an input device 301, an output device 302, a communication device 303, a CPU 310, a memory 316, and an auxiliary storage device 320 connected to each other by an internal communication line such as a bus.

Since the description as the hardware of the input device 301, the output device 302, and the communication device 303 is similar to the description as the hardware of the input device 201, the output device 202, and the communication device 203, respectively, the description will be omitted. Hereinafter, differences between the CPU 310 and the CPU 210 and between the memory 316 and the memory 215, respectively, will be described, and description of the same points will be omitted.

The CPU 310 holds an encryption/decryption key 311 unique to the CPU 310 inside the CPU 310. The unique encryption/decryption key 311 held in the CPU 310 is a key that can be used only by the CPU 310 (the encryption/decryption key 311 unique to the CPU 310 is not snooped on by other hardware included in the computer including the CPU 310, or by other computers). The CPU 310 includes, for example, a secure processing unit 312 and a data management unit 313 which are both functional units. In addition, the secure processing unit 312 includes, for example, an encryption/decryption processing unit 314 and a key management unit 315 which are both functional units.

The encryption/decryption key 311 is a key used to encrypt and decrypt data written in the memory 316. By encrypting the data written in the memory 316 with the encryption/decryption key 311, the data is prevented from being snooped on by a third party due to interception of a signal or the like flowing through the main body of the memory 316 or an internal communication line. Note that the secure processing unit 312 executes, for example, the encryption/decryption using the encryption/decryption key 311 inside the CPU 310.

Note that, in a case where there is no possibility that the data written in the memory 316 is snooped on by a third party, the encryption/decryption key 311 may not be held inside the CPU 310 (for example, the encryption/decryption key is held in the parameter recording unit 340 or the like of the auxiliary storage device 320).

Note that the encryption/decryption key 311 (unique to the first secure server 300-1) included in the first secure server 300-1 and the encryption/decryption key 311 (unique to the second secure server 300-2) included in the second secure server 300-2 are different keys in principle. In addition, the second secure server 300-2 may not have the encryption/decryption key 311.

The CPU 310 is, for example, a trusted execution environment (TEE) compatible CPU. By the TEE function, the secure processing unit 312 of the CPU 310 generates, in the memory 316, a trusted region that is a hardware storage region and logically isolated from other regions (which is also a region in which security is ensured). When generating the trusted region in the memory 316, the CPU 310 uses, for example, the encryption/decryption key 311. Note that the trusted region may be generated at the time of execution of the processing, or may be generated before the start of the processing.

The secure processing unit 312 (and each functional unit included in the secure processing unit 312) executes various types of processing to be described later using the trusted region (however, the encryption/decryption processing using the encryption/decryption key 311 is executed inside the CPU 310). When outputting data used for processing using the trusted region, data generated by processing using the trusted region, and the like to the outside of the trusted region (a normal region to be described later, an auxiliary storage device 320, or an external device), the secure processing unit 312 may output only the encrypted data to the outside after the encryption/decryption processing unit 314 encrypts the data in the trusted region.

Furthermore, when performing various types of processing using the encrypted data, the secure processing unit 312 performs various types of processing on the decrypted data after the encryption/decryption processing unit 314 decrypts the encrypted data in the trusted region.

The secure processing unit 312 can conceal the data used in the processing by the secure processing unit 312, the data generated by the secure processing unit 312, and the like to the administrator of the secure data backup system or the administrator of the secure server 300 by executing the encryption/decryption processing inside the CPU 310 or executing the processing using the trusted region, and can realize the secure processing. Furthermore, the secure processing unit 312 can further improve security by encrypting data when outputting the data to the outside of the trusted region.

Among the functional units included in the CPU 310, a functional unit that is not included in the secure processing unit 312 and is different from the secure processing unit 312 executes processing using a normal region different from the trusted region of the memory 316. Furthermore, in a case where the secure server 300 further includes a GPU, the GPU executes processing using the normal region.

In the above example, the TEE is adopted as an environment for realizing processing in a safe region isolated on the memory 316, but a method different from the TEE may be adopted.

Note that the CPU 310 may not be a TEE-compatible CPU, and in this case, the CPU 310 does not generate a trusted region in the memory 316, and various processing to be executed using the trusted region is executed using a normal region in the memory 316.

The key management unit 315 manages a key used for encryption and/or decryption that is used by the encryption/decryption processing unit 314. The data management unit 313 manages data held by the secure server 300.

The auxiliary storage device 320 includes, for example, a data recording unit 330 and a parameter recording unit 340. In the data recording unit 330, for example, various kinds of data including data obtained by encrypting the data S to be escrowed are recorded. Various parameters including a key used by the encryption/decryption processing unit 314 are recorded in the parameter recording unit 340.

### <Configuration example of data storage server 500>

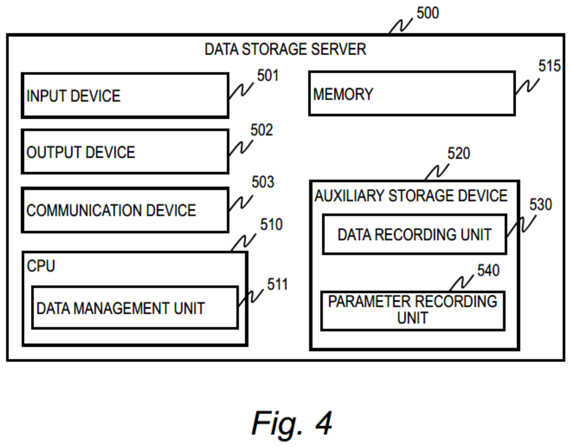

Fig. 4 is a block diagram illustrating a configuration example of the data storage server 500. The data storage server 500 includes, for example, a computer including an input device 501, an output device 502, a communication device 503, a CPU 510, a memory 515, and an auxiliary storage device 520 connected to each other by an internal communication line such as a bus.

Since the description of the hardware of the input device 501, the output device 502, the communication device 503, the CPU 510, the memory 515, and the auxiliary storage device 520 is similar to the description of the hardware of the input device 201, the output device 202, the communication device 203, the CPU 210, the memory 215, and the auxiliary storage device 220, respectively, the description will be omitted.

The CPU 510 includes, for example, a data management unit 511 which is a functional unit. The data management unit 511 manages data held by the secure server 300.

The auxiliary storage device 520 includes, for example, a data recording unit 530 and a parameter recording unit 540. In the data recording unit 530, for example, various kinds of data including duplicated data of data obtained by encrypting the data S to be escrowed are recorded. Various parameters are recorded in the parameter recording unit 540.

### <Data escrow with first secure server 300-1>

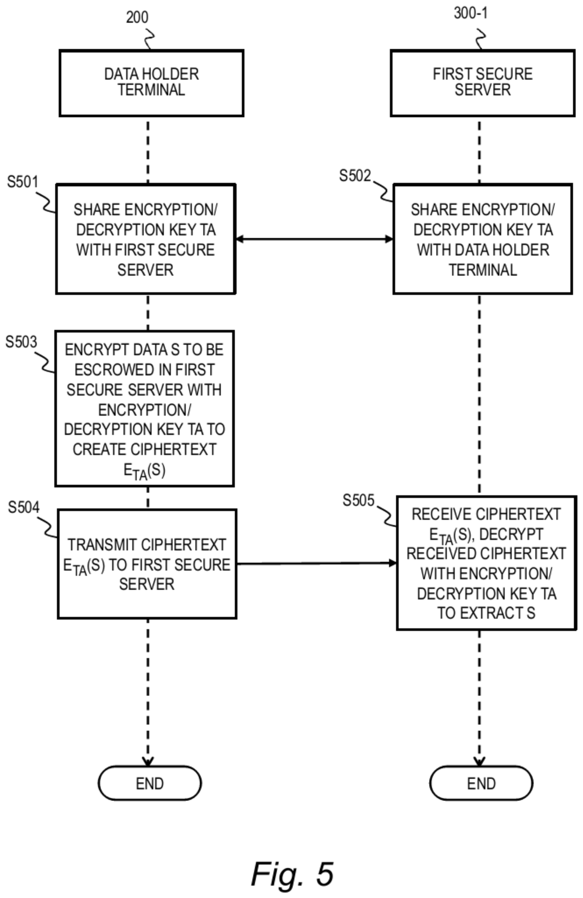

Fig. 5 is a sequence diagram illustrating an example of data escrow processing with the first secure server 300-1. In the data escrow processing, the data holder terminal 200 escrows the data S held in the data recording unit 230 to the first secure server 300-1 in a state in which it cannot be seen by a third party.

First, in steps S501 and S502, the key management unit 212 of the data holder terminal 200 and the key management unit 315 of the first secure server 300-1 share an encryption/decryption key TA for encrypting/decrypting the data S held by the data holder terminal 200 using, for example, the Diffie-Hellman key exchange method or the like. Note that the encryption/decryption key TA may be shared in advance between the key management unit 212 of the data holder terminal 200 and the key management unit 315 of the first secure server 300-1. In this case, the processing of steps S501 and S502 is omitted.

In step S503, the encryption/decryption processing unit 211 of the data holder terminal 200 encrypts the data S stored in the data recording unit 230 with the encryption/decryption key TA to create a ciphertext E_{TA}(S). The encryption/decryption processing unit 211 executes encryption in step S503 using, for example, an algorithm such as a known symmetric-key encryption scheme.

In step S504, the data management unit 213 of the data holder terminal 200 transmits the ciphertext E_{TA}(S) to the first secure server 300-1. In step S505, the encryption/decryption processing unit 314 of the first secure server 300-1 extracts the data S by decrypting the ciphertext E_{TA}(S) received in step S504 using the encryption/decryption key TA, and the data escrow processing ends.

Note that the encryption/decryption key TA may be deleted from the data holder terminal 200 when the processing in step S503 is completed. In addition, the encryption/decryption key TA may be deleted from the first secure server 300-1 when the processing in step S505 is completed.

### <Private key escrow with second secure server 300-2>

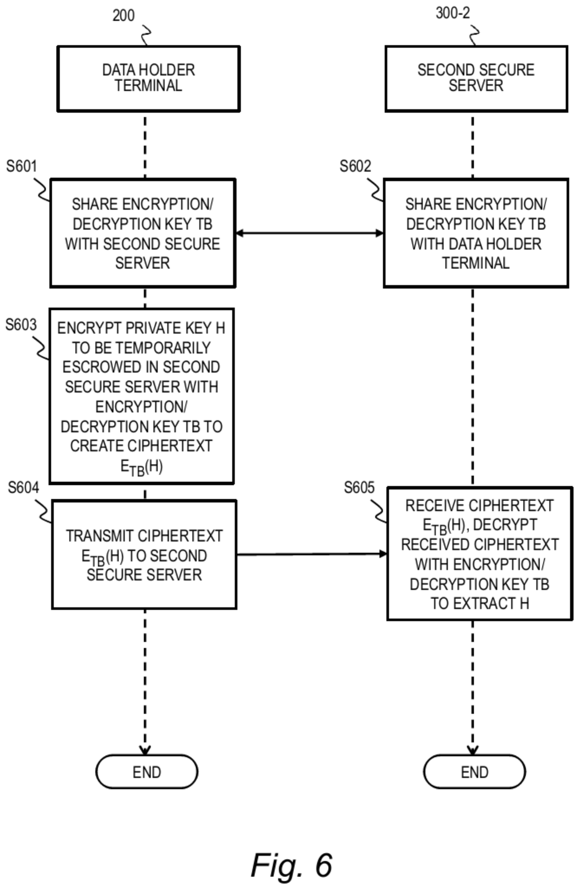

Fig. 6 is a sequence diagram illustrating an example of private key escrow processing with the second secure server 300-2. In the private key escrow processing, the data holder terminal 200 transmits the private key H held in the parameter recording unit 240 to the second secure server 300-2.

First, in steps S601 and S602, the key management unit 212 of the data holder terminal 200 and the key management unit 315 of the second secure server 300-2 share an encryption/decryption key TB for encrypting/decrypting the private key H held by the data holder terminal 200 using, for example, the Diffie-Hellman key exchange method or the like. Note that the encryption/decryption key TB may be shared in advance between the key management unit 212 of the data holder terminal 200 and the key management unit 315 of the second secure server 300-2, and in this case, the processing of steps S601 and S602 is omitted.

In step S603, the encryption/decryption processing unit 211 of the data holder terminal 200 encrypts the private key H recorded in the parameter recording unit 240 with the encryption/decryption key TB to create a ciphertext E_{TB}(H). The encryption/decryption processing unit 211 executes encryption in step S603 using, for example, an algorithm such as a known symmetric-key encryption scheme.

In step S604, the data management unit 213 of the data holder terminal 200 transmits the ciphertext E_{TB}(H) to the second secure server 300-2. In step S605, the encryption/decryption processing unit 314 of the second secure server 300-2 decrypts the ciphertext E_{TB}(H) received in step S504 using the encryption/decryption key TB to extract the private key H, and the private key escrow ends.

Note that the encryption/decryption key TB may be deleted from the data holder terminal 200 when the processing in step S603 is completed. Further, when the processing in step S605 is completed, the encryption/decryption key TA may be deleted from the second secure server 300-2.

### <Encryption key sharing processing between secure servers 300 and encryption storage processing of data S>

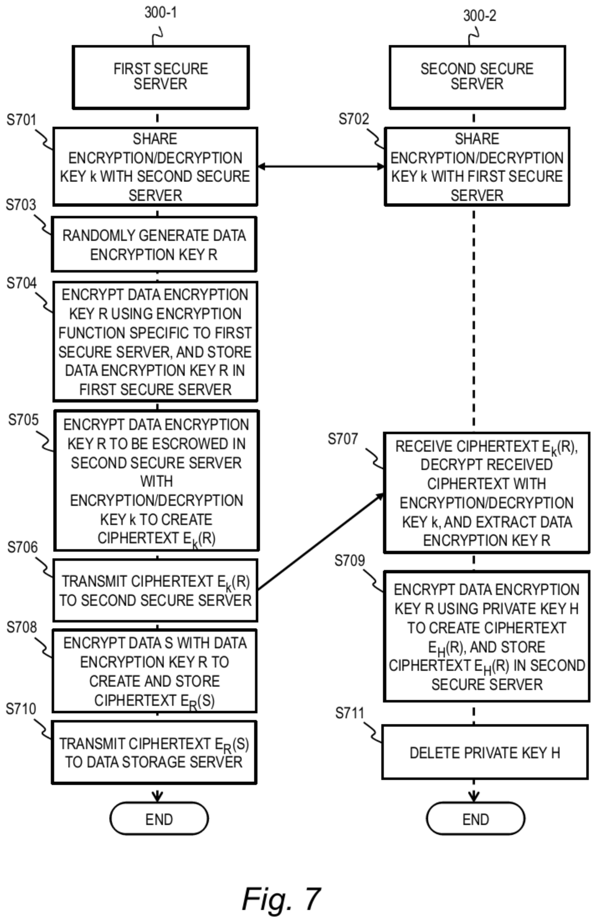

Fig. 7 is a sequence diagram illustrating an example of the data encryption storage processing. In the data encryption storage processing, a key for encrypting the data S is shared between the first secure server 300-1 and the second secure server 300-2, and each of the first secure server 300-1 and the second secure server 300-2 encrypts and stores the key.

First, in steps S701 and S702, the key management unit 315 of the first secure server 300-1 and the key management unit 315 of the second secure server 300-2 share an encryption/decryption key k (an example of a first shared key) for encrypting/decrypting a data encryption key R to be described later using, for example, the Diffie-Hellman key exchange method or the like.

In step S703, the key management unit 315 of the first secure server 300-1 generates the data encryption key R randomly, for example. Note that the data encryption key R may be stored in the memory 316 in advance, and in this case, the processing of step S703 is omitted.

In step S704, the encryption/decryption processing unit 314 of the first secure server 300-1 encrypts the data encryption key R in the CPU 310 of the first secure server 300-1 by using the encryption/decryption key 311 unique to (the CPU 310 of) the first secure server 300-1, and the data management unit 313 of the first secure server 300-1 stores the encrypted data encryption key R in the parameter recording unit 340 of the first secure server 300-1.

In step S705, the encryption/decryption processing unit 314 of the first secure server 300-1 encrypts the data encryption key R to be escrowed in the second secure server 300-2 with the encryption/decryption key k to create a ciphertext Eₖ(R) (an example of a first ciphertext).

In step S706, the data management unit 313 of the first secure server 300-1 transmits the ciphertext Eₖ(R) to the second secure server 300-2. In step S707, the encryption/decryption processing unit 314 of the second secure server 300-2 decrypts the ciphertext Eₖ(R) received in step S706 using the encryption/decryption key k to extract the data encryption key R.

In step S708, the encryption/decryption processing unit 314 of the first secure server 300-1 encrypts the data S retrieved in step S505 with the data encryption key R to generate a ciphertext E_{R}(S) (an example of a second ciphertext), and the data management unit 313 of the first secure server 300-1 stores the ciphertext E_{R}(S) in the data recording unit 330 of the first secure server 300-1. Note that the unencrypted data S and the unencrypted data encryption key R are deleted from the first secure server 300-1 after the processing in step S708 is completed.

In step S709, the encryption/decryption processing unit 314 of the second secure server 300-2 encrypts the data encryption key R using the private key H extracted in step S605 to create a ciphertext E_{H}(R) (an example of a third ciphertext), and the data management unit 313 of the second secure server 300-2 stores the ciphertext E_{H}(R) in the parameter recording unit 340 of the second secure server 300-2. Note that the unencrypted data encryption key R is deleted from the second secure server 300-2 after the processing in step S709 ends.

In step S710, the data management unit 313 of the first secure server 300-1 transmits the ciphertext E_{R}(S) to the data storage server 500. Note that the data management unit 511 of the data storage server 500 stores the ciphertext E_{R}(S) received in step S710 in the data recording unit 530.

In step S711, the key management unit 315 of the second secure server 300-2 deletes the private key H from the second secure server 300-2, and the data encryption storage processing ends. Since the private key H is deleted from the second secure server 300-2, the second secure server 300-2 cannot decrypt the data encryption key R unless the private key H is received again from the data holder terminal 200, and thus cannot restore the data S even if the ciphertext E_{R}(S) is obtained. Therefore, the risk of leakage of the data S can be reduced.

Note that, in step S704, the first secure server 300-1 may share the private key H with the data holder terminal 200 by a method similar to the method illustrated in Fig. 6, for example, encrypt the data encryption key R with the private key H by a method similar to step S709 to generate a ciphertext E_{R}(S), and store the generated ciphertext E_{R}(S) in the parameter recording unit 340 of the first secure server 300-1. In this case, when the data encryption key R is encrypted with the private key H, the first secure server 300-1 deletes the private key H from the first secure server 300-1.

Note that the encryption/decryption key k may be deleted from the first secure server 300-1 after the processing in step S705 is completed. Further, the encryption/decryption key k may be deleted from the second secure server 300-2 after the processing in step S707 is completed.

Note that, in step S704, the encryption/decryption processing unit 211 of the first secure server 300-1 may encrypt the data encryption key R using a key that can be regenerated only in the first secure server 300-1, the key being generated by adding the encryption/decryption key 311 that is the unique key of the first secure server 300-1 and the auxiliary information that can be generated only in the first secure server 300-1. In this case, when the data encryption key R is decrypted in an escrow data use processing to be described later, the regeneratable key is used.

### <Use of escrow data>

An example of a process in which the data holder terminal 200 uses the escrowed data S when the first secure server 300-1 is operating normally will be described. The data management unit 213 of the data holder terminal 200 generates a use request of the data S in accordance with, for example, an input to the input device 201 by a user, and transmits the use request to the first secure server 300-1.

Upon receiving the use request, the encryption/decryption processing unit 314 of the first secure server 300-1 extracts the data encryption key R encrypted in step S704 and stored in the parameter recording unit 340, and uses the encryption/decryption key 311 that is the unique key of the CPU 310 of the first secure server 300-1 to perform decryption inside the CPU 310, thereby extracting the data encryption key R.

The encryption/decryption processing unit 314 of the first secure server 300-1 extracts the ciphertext E_{R}(S) from the data recording unit 330 of the first secure server 300-1, and decrypts the ciphertext E_{R}(S) with the acquired data encryption key R to extract the data S.

The key management unit 315 of the first secure server 300-1 and the key management unit 212 of the data holder terminal 200 share a key by, for example, a method similar to steps S501 and S502. The encryption/decryption processing unit 314 of the first secure server 300-1 encrypts the data S with the shared key (an example of a third shared key), and the data management unit 313 of the first secure server 300-1 transmits the data S encrypted with the shared key (an example of sixth encrypted data) to the data holder terminal 200. When the data S is encrypted with the shared key, the decrypted data S is deleted from the first secure server 300-1.

The encryption/decryption processing unit 211 of the data holder terminal 200 receives the data S encrypted with the shared key from the first secure server 300-1, and decrypts the data S encrypted with the shared key with the shared key to extract the data S.

### <Data restoration>

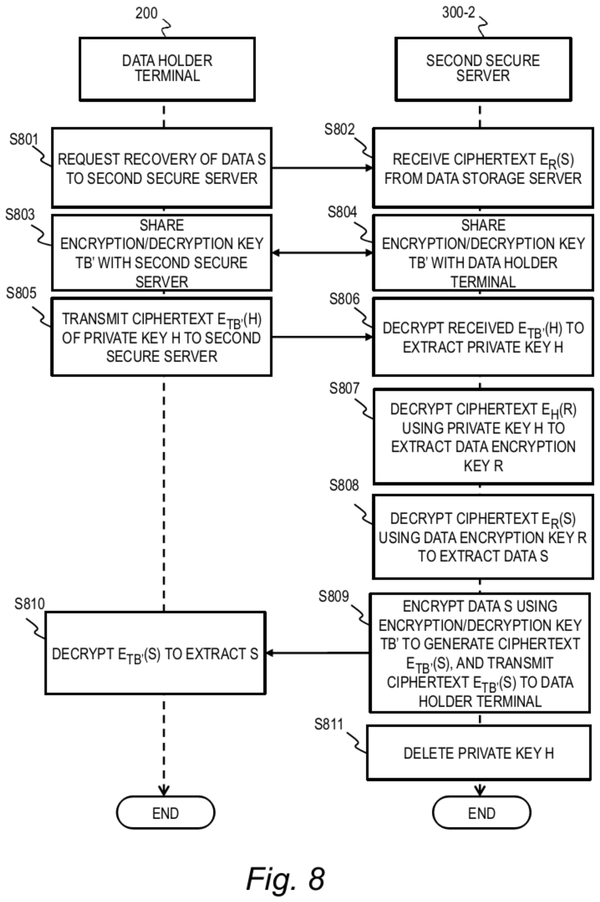

Fig. 8 is a sequence diagram illustrating an example of data restoration processing in a case where the first secure server 300-1 cannot be used due to the occurrence of a failure or the like in the first secure server 300-1. In the data restoration processing of Fig. 8, the second secure server 300-2 that has received the request from the data holder terminal 200 restores the data escrowed in the data storage server 500.

First, in step S801, the data management unit 213 of the data holder terminal 200 generates a restoration request of the data S in accordance with, for example, the input by the user to the input device 201, and transmits the restoration request to the second secure server 300-2.

In step S802, after receiving the data S restoration request, the data management unit 313 of the second secure server 300-2 requests the data storage server 500 to transmit the ciphertext E_{R}(S) of the data S, and receives the ciphertext E_{R}(S) from the data storage server 500.

In steps S803 and S804, the key management unit 212 of the data holder terminal 200 and the key management unit 315 of the second secure server 300-2 share an encryption/decryption key TB' (an example of a second shared key) using, for example, the Diffie-Hellman key exchange method or the like. Note that the encryption/decryption key TB' may be shared in advance between the key management unit 212 of the data holder terminal 200 and the key management unit 315 of the second secure server 300-2, and in this case, the processing of steps S803 and S804 is omitted.

In step S805, the encryption/decryption processing unit 211 of the data holder terminal 200 encrypts the private key H stored in the parameter recording unit 240 using the encryption/decryption key TB' to generate a ciphertext E_{TB'}(H) (an example of a fourth ciphertext), and the data management unit 213 transmits the ciphertext E_{TB'}(H) to the second secure server 300-2.

In step S806, the encryption/decryption processing unit 314 of the second secure server 300-2 decrypts the received ciphertext E_{TB'}(H) using the shared encryption/decryption key TB' to extract the private key H. In step S807, the encryption/decryption processing unit 314 of the second secure server 300-2 decrypts the ciphertext E_{H}(R) using the private key H to extract the data encryption key R.

In step S808, the encryption/decryption processing unit 314 of the second secure server 300-2 extracts the data S by decrypting the ciphertext E_{R}(S) received in step S802 using the data encryption key R. Note that the decrypted data encryption key R is deleted from the second secure server 300-2 after the processing in step S808 is completed.

In step S809, the second secure server 300-2 encrypts the data S using the encryption/decryption key TB' shared in step S804 to create a ciphertext E_{TB'}(S) (an example of a fifth ciphertext), and transmits the ciphertext E_{TB'}(S) to the data holder terminal 200. Note that the decrypted data S is deleted from the second secure server 300-2 after the processing in step S809 ends.

In step S810, the encryption/decryption processing unit 211 of the data holder terminal 200 decrypts the ciphertext E_{TB'}(S) received in step S809 using the shared encryption/decryption key TB' to extract data S. In step S811, the key management unit 315 of the second secure server 300-2 deletes the private key H from the second secure server 300-2, and the data restoration processing ends.

In the present embodiment, an example of a data restoration method in a case where a failure or the like occurs in the first secure server 300-1 and the data S escrowed by the data holder terminal 200 cannot be retrieved from the first secure server 300-1 has been described. The first secure server 300-1, the second secure server 300-2, and the data storage server 500 may be installed in the same data center, or some or all of them may be separately installed in different data centers.

However, in a case where the place where the first secure server 300-1 is installed is damaged by a disaster or the like and becomes difficult to use, if the second secure server 300-2 and the data storage server 500 are installed in places where the damage has not occurred, the possibility of data restoration increases and availability increases. Therefore, the second secure server 300-2 and the data storage server 500 are desirably installed in places different from the first secure server 300-1.

The secure data backup system may also not include the data storage server 500. In this case, in step S710, the ciphertext E_{R}(S) is transmitted to the second secure server 300-2, the second secure server 300-2 stores the ciphertext E_{R}(S), and the processing in step S802 is omitted.

Note that at least a part of the encryption processing and the decryption processing by the first secure server 300-1 and at least a part of the encryption processing and the decryption processing by the second secure server 300-2 are executed by the secure processing unit 312 (a part of the encryption processing and the decryption processing may be performed outside the secure processing unit 312). However, if the private key H, the data S, and the data encryption key R are leaked, security may be significantly deteriorated, and thus, it is desirable that processing in which these pieces of information appear in plain text be executed by the secure processing unit 312.

As described above, in the secure data backup system of the present embodiment, the first secure server 300-1 encrypts the data S to be escrowed with the data encryption key R, and encrypts and holds the data encryption key R with the encryption/decryption key 311 that is the unique key of the CPU 310 of the first secure server 300-1. The first secure server 300-1 also causes the data storage server 500 to store the duplicated data of the encrypted data S. In addition, the second secure server 300-2 encrypts and stores the data encryption key R using the private key H of the data holder terminal 200, and stores the private key H in the second secure server 300-2. In addition, the data storage server 500 (also the first secure server 300-1) does not hold the private key H, and does not hold information regarding the data encryption key R.

As a result, the second secure server 300-2 cannot restore the data S in cooperation with the data storage server 500 unless the private key H is received from the data holder terminal 200 (that is, the data S cannot be restored without permission of the user of the data holder terminal 200), and only the first secure server 300-1 can restore the data S. Furthermore, in order for the first secure server 300-1 to restore the data S, it is necessary to use the encryption/decryption key 311 that is a unique key of the CPU 310 of the first secure server 300-1, and thus, the data S is extremely securely concealed.

On the other hand, in a case where the first secure server 300-1 becomes unavailable, if the data holder terminal 200 shares the private key H with the second secure server 300-2 again, the second secure server 300-2 can restore the data S in cooperation with the data storage server 500.

As described above, in the secure data backup system of the present embodiment, while firmly protecting the data S using the TEE or the like, when a failure or the like occurs in the first secure server 300-1, the second secure server 300-2 can restore the data S in cooperation with the data storage server 500 on the condition of permission or approval (data restoration request) by the user of the data holder terminal 200, that is, a person having authority to restore or browse the data. As a result, the risk of data loss can be reduced while using a secure execution environment such as the TEE, and the user can use the TEE or the like in the cloud with more security.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings show control lines and information lines as considered necessary for explanations but do not show all control lines or information lines in the products. It can be considered that almost of all components are actually interconnected.

## Claims

1. An information processing system comprising:
a first secure server; and
a second secure server,
the first secure server being configured to hold escrow target data, a data encryption key, a first shared key, and a unique key unique to the first secure server,
the second secure server being configured to hold a private key and the first shared key,
the first secure server being configured to:
encrypt the data encryption key with the unique key;
store the data encryption key in the first secure server;
generate a first ciphertext obtained by encrypting the data encryption key with the first shared key;
transmit the first ciphertext to the second secure server;
generate a second ciphertext obtained by encrypting the escrow target data with the data encryption key;
store the second ciphertext in the first secure server; and
output duplicated data of the second ciphertext, and
the second secure server being configured to:
decrypt the first ciphertext received from the first secure server with the first shared key to extract the data encryption key;
generate a third ciphertext obtained by encrypting the extracted data encryption key with the private key;
store the third ciphertext in the second secure server; and
delete the private key from the second secure server.

2. The information processing system according to claim 1,
wherein the second secure server is configured to:
hold a second shared key;
acquire the duplicated data;
receive a restoration request of the escrow target data and a fourth ciphertext in which the private key is encrypted with the second shared key from a data holder terminal that holds the second shared key;
decrypt the fourth ciphertext received from the data holder terminal with the second shared key to extract the private key;
decrypt the third ciphertext with the extracted private key to extract the data encryption key;
decrypt the acquired duplicated data with the extracted data encryption key to extract the escrow target data;
encrypt the extracted escrow target data with the second shared key to generate a fifth ciphertext;
transmit the fifth ciphertext to the data holder terminal; and
delete the extracted private key from the second secure server.

3. The information processing system according to claim 2, further comprising the data holder terminal,
wherein the data holder terminal is configured to:
hold the private key;
encrypt the private key with the second shared key to generate the fourth ciphertext;
transmit the restoration request and the generated fourth ciphertext to the second secure server; and
decrypt the fifth ciphertext received from the second secure server with the second shared key to extract the escrow target data.

4. The information processing system according to claim 3, further comprising a data storage server,
wherein the first secure server is configured to transmit the duplicated data to the data storage server,
wherein the data storage server is configured to store the duplicated data received from the first secure server in the data storage server,
wherein the second secure server is configured to request the data storage server to transmit the duplicated data when receiving the restoration request, and
wherein the data storage server is configured to transmit the duplicated data to the second secure server in response to the request for transmission of the duplicated data from the second secure server, so that the second secure server acquires the duplicated data.

5. The information processing system according to claim 2,
wherein the data holder terminal is configured to hold a third shared key, and
wherein the first secure server is configured to:
hold the third shared key;
receive a use request of the escrow target data from the data holder terminal;
decrypt the data encryption key encrypted with the unique key with the unique key to extract the data encryption key;
decrypt the second ciphertext with the extracted data encryption key to extract the escrow target data;
encrypt the extracted escrow target data with the third shared key to generate a sixth ciphertext; and
transmit the sixth ciphertext to the data holder terminal.

6. The information processing system according to claim 5, further comprising the data holder terminal,
wherein the data holder terminal is configured to:
transmit the use request to the first secure server; and
decrypt the sixth ciphertext received from the first secure server with the third shared key to extract the escrow target data.

7. The information processing system according to claim 1,
wherein the first secure server includes a first processor and a first memory,
wherein the second secure server includes a second processor and a second memory,
wherein the first processor is configured to:
configure, in the first memory, a first trusted region in which security is ensured and which is logically isolated; and
execute at least part of an encryption process and a decryption process by the first secure server using the first trusted region, and
wherein the second processor is configured to:
configure, in the second memory, a second trusted region in which security is ensured and which is logically isolated: and
execute at least part of an encryption process and a decryption process by the second secure server using the second trusted region.

8. The information processing system according to claim 1,
wherein the first secure server includes a first processor and a first memory,
wherein the unique key is held inside the first processor, and
wherein an encryption process and a decryption process which use the unique key are configured to be executed inside the first processor.

9. An information processing method by an information processing system,
the information processing system including:
a first secure server; and
a second secure server,
the first secure server being configured to hold escrow target data, a data encryption key, a first shared key, and a unique key unique to the first secure server,
the second secure server being configured to hold a private key and the first shared key, and
the information processing method comprising:
encrypting, by the first secure server, the data encryption key with the unique key;
storing, by the first secure server, the data encryption key in the first secure server;
generating, by the first secure server, a first ciphertext obtained by encrypting the data encryption key with the first shared key;
transmitting, by the first secure server, the first ciphertext to the second secure server;
generating, by the first secure server, a second ciphertext obtained by encrypting the escrow target data with the data encryption key;
storing, by the first secure server, the second ciphertext in the first secure server;
outputting, by the first secure server, duplicated data of the second ciphertext;
decrypting, by the second secure server, the first ciphertext received from the first secure server with the first shared key to extract the data encryption key;
generating, by the second secure server, a third ciphertext obtained by encrypting the extracted data encryption key with the private key;
storing, by the second secure server, the third ciphertext in the second secure server; and
deleting, by the second secure server, the private key from the second secure server.

10. A computer-readable non-transitory storage medium storing a program set that can be executed by a first secure server and a second secure server,
the program set including at least one programs,
the first secure server being configured to hold escrow target data, a data encryption key, a first shared key, and a unique key unique to the first secure server,
the second secure server being configured to hold a private key and the first shared key,
the first secure server that executes the program set being configured to:
encrypt the data encryption key with the unique key;
store the data encryption key in the first secure server;
generate a first ciphertext obtained by encrypting the data encryption key with the first shared key;
transmit the first ciphertext to the second secure server;
generate a second ciphertext obtained by encrypting the escrow target data with the data encryption key;
store the second ciphertext in the first secure server; and
output duplicated data of the second ciphertext, and
the second secure server that executes the program set being configured to:
decrypt the first ciphertext received from the first secure server with the first shared key to extract the data encryption key;
generate a third ciphertext obtained by encrypting the extracted data encryption key with the private key;
store the third ciphertext in the second secure server; and
delete the private key from the second secure server.

11. The computer-readable non-transitory storage medium according to claim 10,
wherein the program set includes:
a common program that is executed by the first secure server and the second secure server; or
a first program for the first secure server and a second program for the second secure server.
